Europäisches Patentamt

European Patent Office

Office européen des brevets

(11) Veröffentlichungsnummer: **0 462 502 A2**

# (12) EUROPÄISCHE PATENTANMELDUNG

(21) Anmeldenummer: **91109649.3**

(22) Anmeldetag: **12.06.91**

(51) Int. Cl.5: **B02C 19/12**

(30) Priorität: **16.06.90 DE 4019312**

(43) Veröffentlichungstag der Anmeldung:
**27.12.91 Patentblatt 91/52**

(84) Benannte Vertragsstaaten:
**AT BE CH DE DK ES FR GB GR IT LI LU NL SE**

(71) Anmelder: **O.R.T. OBERLÄNDER
RECYCLING-TECHNIK GmbH
Brandschachtstrasse 11
W-4600 Dortmund(DE)**

(72) Erfinder: **Oberländer, Werner, Dipl.-Ing.
Zur Kattenkuhle 16
W-5802 Wetter/Ruhr 1(DE)**

(74) Vertreter: **Bockermann, Rolf, Dipl.-Ing. et al
Patent- und Rechtsanwälte Oidtmann, Paul
Heinz, Dr.-Ing, Bockermann, Rolf, Dipl.-Ing.,
Bergstrasse 159
W-4630 Bochum 1(DE)**

(54) **Verfahren zur Zerlegung von Personenkraftwagen.**

(57) Bei diesem Verfahren werden stark deformierte oder vorgepreßte Personenkraftwagen (2, 3) in einer Stufenzerlegung hinsichtlich der Eisen-, Nichteisen- und Kunststoffbestandteile bei weitgehender Dekontaminierung von z.B. Öl, Benzin, Säuren und darin enthaltenen Schwermetallen auseinandergerissen. Dies erfolgt zunächst in einer langsam umlaufenden Vorzerkleinerung (1) mit der Erzeugung von Grobteilen (5). Diese werden dann in einen schnell umlaufenden Shredder gegeben, hier auf eine recyclingfähige Korngröße zerrissen und anschließend nach ihrem Eisen- und Nichteisencharakter separiert. Nicht zerkleinerungsfähige Massivteile können in einem Blockbrecher zerstört werden.

FIG.1

Die Erfindung betrifft ein Verfahren zur Zerlegung von stark deformierten oder vorgepreßten, nicht mehr gebrauchsfähigen Personenkraftwagen gemäß den Merkmalen im Oberbegriff des Patentanspruchs.

Insbesondere unter Beachtung der verschärften Bestimmungen des Umweltschutzes bildet es ein großes Problem, durch Unfall stark deformierte oder zur Verminderung des Transportvolumens vorgepreßte, nicht mehr gebrauchsfähige Personenkraftwagen hinsichtlich der verschiedenen Werkstoffe und Betriebsmittel so gezielt zu zerlegen, daß die Eisen- und Nichteisenbestandteile sowie andere nichtmetallische Werkstoffe schadstofffrei dem Recycling-Prozeß zugeführt und die Kunststoffbestandteile problemlos auf normalen Hausratsmüll aufnehmenden Deponien gelagert werden können.

Ein bekanntes Verfahren zur Zerlegung von Personenkraftwagen sieht die manuelle Demontage von einzelnen Personenkraftwagen durch eine Arbeitskraft oder mehrere Arbeitskräfte vor. Hierbei zerlegen diese Arbeitskräfte jeden Personenkraftwagen nacheinander in die voneinander trennbaren Einzelteile und tragen ferner dafür Sorge, daß sowohl die diversen Werkstoffe separiert als auch die Betriebsmittel, wie z.B. Öl, Benzin, Säure und Kühlmittel entsorgt werden. Die manuelle Einzeldemontage von Personenkraftwagen ist jedoch durch den hohen Zeit-, Platz- und Personalbedarf unrentabel und unter wirtschaftlichen Aspekten kaum zu vertreten. Sie wird aber insbesondere dann absolut uninteressant, wenn die Personenkraftwagen durch Unfall oder Vorpressung so deformiert sind, daß die Zerlegung in bestimmte Bestandteile oder Baugruppen mit einem noch vernünftigen wirtschaftlichen Aufwand ausgeschlossen werden muß.

Zum Stand der Technik zählt ferner das Verfahren gemäß der DE-OS 36 40 501. Danach wird ein Personenkraftwagen taktweise einzelnen Demontagestationen zugeführt, die auf einzelne oder auf Gruppen von speziellen Arbeiten spezialisiert sind. Ziel dieses Verfahrens ist es, die Entsorgung von Schrottfahrzeugen zu vereinfachen, die Gewinnung von noch brauchbaren Teilen zu rationalisieren und die Entsorgung von umweltbelastenden Materialien sicherzustellen. Es kann aber nicht für stark deformierte Personenkraftwagen herangezogen werden.

Für die Massenzerlegung von stark deformierten oder vorgepreßten Personenkraftwagen hat sich in der Praxis somit ein Verfahren durchgesetzt, bei welchem die Personenkraftwagen nach evtl. Entfernung des Benzins und ggf. teilweiser Entleerung des Öls im kompletten Zustand Zerkleinerungsvorrichtungen mit schnell umlaufenden Zerkleinerungswerkzeugen, wie z. B. Shreddern, zugeführt werden. Die Leistung solcher Zerkleinerungsvorrichtungen erlaubt es zwar, die Personenkraftwagen auf eine recyclingfähige Korngröße zerreißen und die zerrissenen Kleinteile hinsichtlich ihres Eisen-, Nichteisen- und Kunststoffcharakters bzw. sonstigen Werkstoffen separieren zu können; indessen weisen sie den Nachteil auf, daß insbesondere Kunststoffcharakter aufweisenden Kleinteilen noch erhebliche Mengen Öl anhaften, die den Zerkleinerungsprozeß zwangsläufig mit durchlaufen haben. Dieses anhaftende Öl zwingt folglich die Autoverwerter, die Kunststoffkleinteile Sonderdeponien zuzuführen. Die Lagerung auf Sonderdeponien ist aber außerordentlich kostenintensiv, da ihre Schaffung und Unterhaltung aufwendig ist und außerdem hierfür nur begrenzt große Lagerstätten zur Verfügung gestellt werden können.

Nachteilig an der Shredderung von nicht mehr gebrauchsfähigen kompletten Personenkraftwagen ist außerdem der Sachverhalt, daß die Zerkleinerungsvorrichtungen häufig dadurch für längers Zeit blockiert werden, daß in den Personenkraftwagen abgelegte Massivteile, nur sehr schwer zerkleinerungsfähige Bestandteile sowie Gasflaschen aus dem Haushalt und aus Campinganlagen bzw. andere explosive Stoffe vorab nicht erkannt worden sind. Insbesondere im letzteren Falle kann es bei den relativ schnell laufenden Zerkleinerungsvorrichtungen zu Explosionen mit schwerwiegenden Folgen kommen. Blockierte Zerkleinerungsvorrichtungen bedeuten aber Produktionsausfall und zusätzliche Kosten für ihre Reaktivierung.

Der Erfindung liegt mithin die Aufgabe zugrunde, die Zerlegung von stark deformierten oder vorgepreßten, nicht mehr gebrauchsfähigen Personenkraftwagen unter gezielter Separierung der Eisen-, Nichteisen- und Kunststoffbestandteile sowie anderer Werkstoffe zum Zwecke des Recyclings bei weitgehender Dekontaminierung von z.B. Öl, Benzin, Säuren und darin enthaltenen Schwermetallen in zeitlicher, platzmäßiger und personalmäßiger Sicht auf eine befriedigende wirtschaftliche Basis zu stellen.

Die Lösung dieser Aufgabe wird erfindungsgemäß in den im kennzeichnenden Teil des Patentanspruchs aufgeführten Merkmalen gesehen.

Die mit einem vernünftigen wirtschaftlichen Aufwand vorab nicht in diverse Einzelteile zerlegbaren Personenkraftwagen werden jetzt komplett zunächst einer Vorzerkleinerung bei gleichzeitiger Dekontaminierung unterworfen. Die Vorzerkleinerung führt zu zwischenlagerungsfähigen Grobteilen. Die Zwischenlagerung erlaubt dann eine weitere Dekontaminierung der Grobteile. Außerdem ist mit der Vorzerkleinerung die Eigenschaft verbunden, daß explosionsgefährdete Hohlkörper aufgerissen und damit ungefährlich gemacht werden. Selbst Massivteile werden vorzerkleinert und können somit keinen Schaden mehr im anschließenden Shredder-Prozeß anrichten. Nach ausreichend langer Zwischenlagerung mit damit einhergehender gewissenhafter Dekontaminierung können die Grobteile dann gefahrlos in einen Shredder eingegeben und hier auf Recyclinggröße gebracht werden. Nach dem Shreddern ist es dann ebenfalls problemlos möglich, die auf eine recyclingfähige Korngröße zerrissenen Kleinteile hinsichtlich des Eisen-, Nichteisen- und Kunststoffcharakters oder sonstigen Werkstoffs zu separieren und die separierten Werkstoffe anschließend dem jeweiligen Recycling-Prozeß zuzuführen.

Wesentlich an der Erfindung ist es, daß die Zerkleinerung permanent von einer Dekontaminierung begleitet wird. Dies ist mit dem Vorteil verbunden, daß insbesondere die Kunststoffbestandteile nahezu ölfrei anfallen und folglich problemlos den normalen Haushaltsmülldeponien zugeführt werden können, wenn ein Recycling nicht möglich ist. Auch können stark saugende Materialien, wie z. B. die Sitze oder Fußmatten, während der langsam laufenden Vorzerkleinerung nicht nennenswert Schadstoffe aufnehmen. Die Menge der einer Sonderdeponie zuzuführenden Materialien wird demzufolge auf ein Minimum gesenkt.

Ein anderer Vorteil der Erfindung wird darin gesehen, daß nur schwer zerkleinerungsfähige Bestandteile eines Personenkraftwagens oder vor dem Zerlegungsprozeß nicht erkannte, in den Personenkraftwagen abgelegte Massivteile nunmehr in einer ersten Stufe ohne weiteres zu Grobteilen vorzerkleinert werden können. Der letztlich durchgeführte Shredder-Prozeß wird durch diese Grobteile dann nicht mehr beeinträchtigt.

Auch können in Personenkraftwagen noch befindliche intakte Benzintanks, Gasflaschen oder andere explosive Körper ohne weiteres vorzerkleinert werden. Ihr negativer Einfluß in einem und auf einen Shredder gelangt demzufolge gänzlich in Fortfall, da der explosionsfähige Hohlkörpercharakter eindeutig beseitigt wird.

Desweiteren ist mit dem erfindungsgemäßen Verfahren der Vorteil verbunden, daß der schnellaufende und somit leistungsfähige Shredder-Betrieb mit der damit verbundenen erheblichen Lärmbelästigung auf die Tagesstunden beschränkt werden kann. Die Kapazität eines Shredders reicht in der Regel aus, um innerhalb einer Tagesschicht alle bei der wesentlich langsamer laufenden Vorzerkleinerung während beispielsweise eines 24-Stunden-Turnus anfallenden Grobteile ohne weiteres aufzufangen. Da die Vorzerkleinerung erheblich weniger Lärm verursacht als der Shredder-Betrieb, lassen es die Umweltschutzbestimmungen zu, die Vorzerkleinerung rund um die Uhr durchzuführen.

Darüberhinaus ist es im Rahmen der Erfindung von Bedeutung, daß alle die Umwelt besonders belastenden Betriebsmittel aus den Motoren, den Getrieben, den Differentialen, den Kühlern, den Batterien, den Stoßdämpfern und den Treibstoffbehältern gezielt in den Zerkleinerungsstufen dekontaminiert werden können.

Schließlich besteht ein Vorteil der Erfindung noch darin, daß durch die spezielle stufenweise Zerlegung der Personenkraftwagen die letztlich bei dem Shredder erforderliche Entstaubung sowie die sich daran anschließende lufttechnische Separation kleiner und kompakter gehalten werden kann. Da bei einer kompletten Shredderanlage der Anteil für die Entstaubung und die lufttechnische Separation allein ca. 25 % beträgt, kann unter Anwendung des erfindungsgemäßen Verfahrens dieser Anteil um etwa die Hälfte reduziert werden.

Was die Zerkleinerung der Motoren, der Differentiale und der Getriebe auf eine recyclingfähige Korngröße bei gezielter Separierung in Eisen- und Nichteisenbestandteile anlangt, so besteht selbstverständlich die Möglichkeit, diese Teile nach der Vorzerkleinerung ggf. gesondert in einem Blockbrecher bei gleichzeitiger Dekontaminierung zu zerkleinern und die Kleinteile anschließend nach ihrem Eisen- oder Nichteisencharakter zu separieren.

Die Erfindung ist nachfolgend anhand von in den Zeichnungen dargestellten Ausführungsbeispielen näher erläutert. Es zeigen:

Fig. 1    im Schema eine Vorrichtung zum Vorzerkleinern von vorgepreßten oder stark deformierten Personenkraftwagen mit anschließender Zwischenlagerung;

Fig. 2    im Schema einen Shredder mit nachgeschalteter Separation und

Fig. 3    im Schema eine Vorrichtung zur Zerkleinerung von Massivteilen eines Personenkraftwagens.

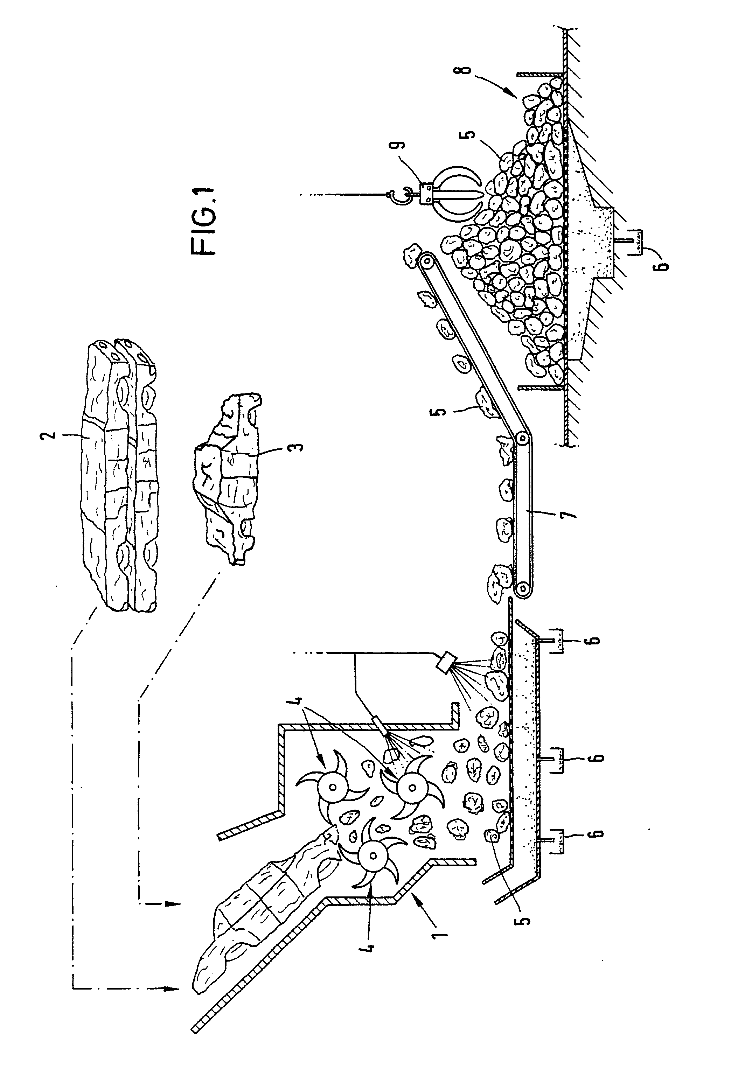

Mit 1 ist in der Figur 1 ein Vorzerkleinerer für vorgepreßte Personenkraftwagen 2 bzw. verunfallte Personenkraftwagen 3 bezeichnet. Derartige Personenkraftwagen 2, 3 sind nicht mehr gezielt zu zerlegen. Sie werden folglich in den langsam umlaufende Reißwerkzeuge 4 aufweisenden Vorzerkleinerer 1 eingegeben, wo sie auf Grobteile 5 bei gleichzeitiger mindestens teilweiser Dekontaminierung von Öl, Benzin, Säuren und Schwermetallen zerrissen werden. Das ggf. aufgefangene flüssige Kontaminat wird einer zentralen Sammeleinheit 6 zugeführt.

Die Grobteile 5 gelangen über ein Förderband 7 auf einen Zwischenlagerplatz 8, wo sie weiter dekontaminiert werden. Das hier aufgefangene flüssige Kontaminat wird ebenfalls der Sammeleinheit 6 zugeführt.

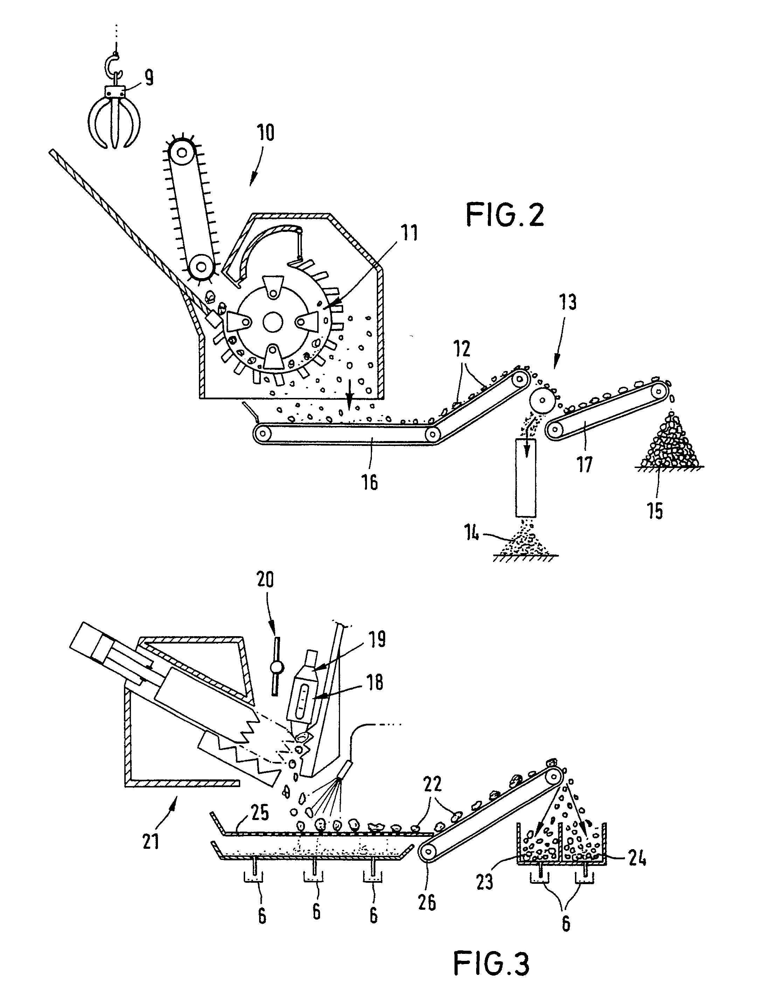

Die ausreichend dekontaminierten Grobteile 5 werden anschließend mittels eines Greifers 9 von dem Zwischenlagerplatz 8 einem Shredder 10 mit schnell umlaufenden Zerkleinerungswerkzeugen 11 zugeleitet (Figur 2). In dem Shredder 10 werden dann alle eingegebenen Teile auf eine recyclingfähige Korngröße zerrissen und die zerrissenen Kleinteile 12 anschließend in einer Separation 13 nach Eisenteilen 14 und Nichteisenteilen 15 separiert. Dazu sind der Separation 13 zwei Förderer 16 und 17 zugeordnet.

Dem Shredder 10 kann ggf. ebenfalls eine mit der Sammeleinheit 6 verbundene Dekontaminierung zugeordnet sein.

Massivteile wie Motor 18, Getriebe 19 und Differential 20 können bei Bedarf gemäß Figur 3 einem Blockbrecher 21 zugeführt werden. In dem Blockbrecher 21 werden diese Teile 18-20 auf eine für den Recyclingprozeß geeignete Korngröße zerkleinert und diese Kleinteile 22 anschließend nach Eisenbestandteilen und Nichteisenbestandteilen in entsprechenden Behältern 23, 24 separiert. Zwischen dem Sammelbehälter 25 des Blockbrechers 21 und den Behältern 23 und 24 ist ein Förderer 26 sowie eine nicht näher veranschaulichte Separation vorgesehen.

Sowohl die aus dem Blockbrecher 21 tretenden Kleinteile 22 als auch die in die Behälter 23 und 24 separierten Kleinteile 22 werden ständig einer Dekontaminierung unterworfen. Das aufgefangene flüssige Kontaminat wird der zentralen Sammeleinheit 6 zugeleitet.

## Bezugszeichenaufstellung

1 - Vorzerkleinerer
2 - vorgepreßte Personenkraftwagen
3 - verunfallter Personenkraftwagen
4 - Reißwerkzeuge
5 - Grobteile
6 - Sammeleinheit
7 - Förderband
8 - Zwischenlagerplatz
9 - Greifer
10 - Shredder
11 - Zerkleinerungswerkzeuge
12 - Kleinteile
13 - Separation
14 - Eisenteile
15 - Nichteisenteile
16 - Förderer
17 - Förderer
18 - Motor
19 - Getriebe
20 - Differential
21 - Blockbrecher
22 - Kleinteile
23 - Behälter
24 - Behälter
25 - Sammelbehälter
26 - Förderer

## Patentansprüche

1. Verfahren zur Zerlegung von stark deformierten oder vorgepreßten, nicht mehr gebrauchsfähigen Personenkraftwagen (2, 3) unter Separierung der Eisen-, Nichteisen- und Kunststoffbestandteile bei weitgehender Entfernung von Kontaminationen, wie z.B. Öl, Benzin, Säure und darin enthaltenen Schwermetallen,
   **dadurch gekennzeichnet,**

   daß jeder Personenkraftwagen (2, 3) in einer Vorzerkleinerung (1) mit langsam umlaufenden Reißwerkzeugen (4) zunächst in Grobteile (5) zerrissen und dabei mindestens teilweise dekontaminiert wird,

   daß anschließend die Grobteile (5) zwischengelagert und hierbei weiter dekontaminiert werden,

   daß dann die dekontaminierten Grobteile (5) aus der Zwischenlagerung (8) in einen Shredder (10) überführt werden,

   daß nun die Grobteile (5) im Shredder (10) mit im Vergleich zu den Reißwerkzeugen (4) der Vorzerkleinerung (1) wesentlich schneller umlaufenden Zerkleinerungswerkzeugen (11) zu Kleinteilen (12) mit recyclingfähiger Korngröße reduziert werden.

FIG.1

EP 0 462 502 A2

FIG.2

FIG.3